# EUROPÄISCHE PATENTSCHRIFT

(11) **EP 3 892 412 B1**
(45) Veröffentlichungstag und Bekanntmachung des Hinweises auf die Patenterteilung: **14.12.2022**
(21) Anmeldenummer: 21152872.4
(22) Anmeldetag: 22.01.2021
(51) Int. Cl.: B23K 11/11, B23K 11/25, B23K 11/36, B23K 31/02, B23K 31/12

(54) **VERFAHREN ZUM DYNAMISCHEN SETZEN VON REGLERGRENZWERTEN FÜR EINE SCHWEISSSTEUERUNG UND ENTSPRECHENDE SCHWEISSSTEUERUNG UND COMPUTERPROGRAMM**
METHOD OF DYNAMICALLY SETTING CONTROL THRESHOLDS FOR WELDING CONTROL, AND CORRESPONDING WELDING CONTROL AND COMPUTER PROGRAM
PROCÉDÉ DE RÉGLAGE DYNAMIQUE DES VALEURS LIMITES DU RÉGULATEUR POUR UNE COMMANDE DE SOUDAGE ET COMMANDE ET PROGRAMME D'ORDINATEUR DE SOUDAGE CORRESPONDANTS

(30) Priorität: 08.04.2020 DE 102020204521
(43) Veröffentlichungstag der Anmeldung: 13.10.2021
(73) Patentinhaber: Robert Bosch GmbH, 70442 Stuttgart (DE)
(72) Erfinder: Steimer, Andreas, 75328 Schoemberg (DE); Mcconnell, Sean, 69434 Hirschhorn Am Neckar (DE); Pychynski, Tim, 76137 Karlsruhe (DE); Slavnic, Sinisa, 28357 Bremen (DE); Zhou, Baifan, 71229 Leonberg (DE); Bleier, Fabian, 70180 Stuttgart (DE); Shakirov, Damir, 75223 Niefern-Oeschelbronn (DE); Haeufgloeckner, Juergen, 63936 Schneeberg (DE)

(56) Entgegenhaltungen:
- DE-A1- 10 331 617
- DE-A1- 19 510 343
- US-A1- 2012 118 861
- US-B2- 9 737 952

## Beschreibung

Die Erfindung betrifft ein computerimplementiertes Verfahren zum dynamischen Setzen von Reglergrenzwerten zumindest eines Schweißparameters eines Reglers einer Schweißsteuerung. Die Erfindung betrifft des Weiteren eine Schweißsteuerung zum dynamischen Setzen von Reglergrenzwerten zumindest eines Schweißparameters eines Reglers der Schweißsteuerung. Die Erfindung betrifft darüber hinaus ein Computerprogramm und einen computerlesbaren Datenträger.

### Stand der Technik

Aktuell werden Schweißparameter sowie Reglergrenzwerte in einer Schweißsteuerung von einem Benutzer eingestellt. Aufgrund einer Zeitvarianz des Systemverhaltens, z.B. wegen starkem Verschleiß der Elektroden, kann sich die optimale Parameterwahl mit der Zeit zudem ändern.

Das Widerstandsschweißen dient üblicherweise zur Herstellung einer Verbindung zwischen zwei Blechen bzw. Metallteilen. Eine Widerstandsschweißvorrichtung weist dafür zwei Schweißelektroden auf, zwischen denen ein Schweißstrom fließt. Dabei werden beim Punktschweißen im Karosserierohbau üblicherweise Ströme von 5 kA bis einige 50 kA bei Schweißspannungen im Bereich von 1 bis 2,5 V verwendet. Im Feinpunktschweißen werden auch kleinere Ströme ab 1 kA verwendet.

Bei den zu verbindenden Teilen kann es sich sowohl um Bleche gleicher als auch um Bleche unterschiedlicher Metallart und Dicke handeln. Die einzelnen Schweißvorgänge finden dabei in Zeitfenstern im Bereich von bis zu einer Sekunde statt. Es sind jedoch auch längere Zeiten möglich. Beispielsweise werden im Zuge des automatisierten Karosserierohbaus durch robotergeführte Schweißvorgänge finden dabei in Zeitfenstern im Bereich von bis zu einer Sekunde statt. Es sind jedoch auch längere Zeiten möglich. Beispielsweise werden im Zuge des automatisierten Karosserierohbaus durch robotergeführte Schweißwerkzeuge unterschiedliche Werkstücke, z.B. Bleche, mittels Widerstandsschweißen miteinander verschweißt.

Aus dem Stand der Technik, zum Beispiel der Offenlegung DE 103 34 478 A1, ist eine sogenannte adaptive Schweißregelung bekannt. Bei einer adaptiven Schweißregelung wird in der Schweißsteuerung mithilfe der elektrischen Größen die Prozessimpedanz bestimmt und mit einer hinterlegten oder extern zugeführten Soll-Impedanz verglichen. Abhängig vom Vergleich der Impedanzen steuert ein als Prozessregler bezeichneter Regler den Schweißprozess.

Trotz adaptiver Schweißregelung kann es Anwendungsfälle geben, bei denen die Qualität der Schweißpunkte basierend auf voreingestellten Reglergrenzwerten nicht stabil ist. Dies trifft insbesondere auf das Verschweißen von Aluminium Blechkombinationen mit variierenden Blechdicken zu, weil aufgrund der hohen spezifischen Leitfähigkeit von Aluminiumlegierungen die Wärmeumsetzung sehr gering und der Nebenschlusseinfluss groß ist. Problematisch ist auch das Verschweißen von Blechkombinationen aus verzinktem Stahl.

DE 10331617 A1 (Basis des Oberbegriffs der Ansprüche 1 und 12) offenbart ein Verfahren zur Erfassung und Überwachung der Eigenschaften von Komponenten im Sekundär- bzw. Schweißstromkreis beim Widerstandsschweißen, insbesondere zur Erfassung und Überwachung des Fräsergebnisses der Elektrodenkappen beim Punktschweißen, bei dem für je eine Komponente wenigstens zwei Referenzwerte insbesondere abhängig vom elektrischen Widerstand dieser Komponente ermittelt werden, um hieraus die Eigenschaften dieser Komponente durch Vergleich der Referenzwerte abzuleiten.

Der Erfindung liegt somit die Aufgabe zugrunde, ein Verfahren zum dynamischen Setzen von Reglergrenzwerten zumindest eines Schweißparameters eines Reglers einer Schweißsteuerung und eine entsprechende Schweißsteuerung vorzusehen, welche in der Lage sind, einen optimalen Satz von Reglergrenzwerten des zumindest eines Schweißparameters zu berechnen und dem Regler der Schweißsteuerung bereitzustellen.

Die Aufgabe wird mit einem computerimplementierten Verfahren zum dynamischen Setzen von Reglergrenzwerten zumindest eines Schweißparameters eines Reglers einer Schweißsteuerung mit den Merkmalen des Patentanspruchs 1 gelöst.

Des Weiteren wird die Aufgabe mit einer Schweißsteuerung zum dynamischen Setzen von Reglergrenzwerten zumindest eines Schweißparameters eines Reglers der Schweißsteuerung mit den Merkmalen des Patentanspruchs 12 gelöst. Darüber hinaus wird die Aufgabe mit einem Computerprogramm mit den Merkmalen des Patentanspruchs 13 und mit einem computerlesbaren Datenträger mit den Merkmalen des Patentanspruchs 14 gelöst.

### Offenbarung der Erfindung

Die vorliegende Erfindung schafft ein computerimplementiertes Verfahren zum dynamischen Setzen von Reglergrenzwerten zumindest eines Schweißparameters eines Reglers einer Schweißsteuerung.

Das Verfahren umfasst ein Empfangen eines ersten numerischen Wertes und eines zweiten numerischen Wertes eines Qualitätskriteriums einer Schweißung, wobei ein durch den ersten numerischen Wert und den zweiten numerischen Wert gebildeter Wertebereich einen Toleranzbereich des Qualitätskriteriums der Schweißung bildet.

Das Verfahren umfasst des Weiteren ein Berechnen eines ersten Reglergrenzwertes des zumindest einen Schweißparameters durch einen Optimierungsalgorithmus unter Verwendung des ersten numerischen Wertes des Qualitätskriteriums der Schweißung.

Das Verfahren umfasst ferner ein Berechnen eines zweiten Reglergrenzwertes des zumindest einen Schweißparameters durch den Optimierungsalgorithmus unter Verwendung des zweiten numerischen Wertes des Qualitätskriteriums der Schweißung, wobei ein durch den ersten Reglergrenzwert des zumindest einen Schweißparameters und den zweiten Reglergrenzwert des zumindest einen Schweißparameters gebildeter Wertebereich einen zulässigen Regelbereich des Reglers bildet.

Das Verfahren umfasst darüber hinaus ein Bereitstellen des berechneten ersten Reglergrenzwertes und des berechneten zweiten Reglergrenzwertes des zumindest einen Schweißparameters an den Regler der Schweißsteuerung. Die vorliegende Erfindung schafft ferner eine Schweißsteuerung zum dynamischen Setzen von Reglergrenzwerten zumindest eines Schweißparameters eines Reglers der Schweißsteuerung.

Die Schweißsteuerung umfasst Mittel zum Empfangen eines ersten numerischen Wertes und eines zweiten numerischen Wertes eines Qualitätskriteriums einer Schweißung, wobei ein durch den ersten numerischen Wert und den zweiten numerischen Wert gebildeter Wertebereich einen Toleranzbereich des Qualitätskriteriums der Schweißung bildet.

Die Schweißsteuerung umfasst des Weiteren Mittel zum Berechnen eines ersten Reglergrenzwertes des zumindest einen Schweißparameters durch einen Optimierungsalgorithmus unter Verwendung des ersten numerischen Wertes des Qualitätskriteriums der Schweißung.

Die Schweißsteuerung umfasst darüber hinaus Mittel zum Berechnen eines zweiten Reglergrenzwertes des zumindest einen Schweißparameters durch den Optimierungsalgorithmus unter Verwendung des zweiten numerischen Wertes des Qualitätskriteriums der Schweißung, wobei ein durch den ersten Reglergrenzwert des zumindest einen Schweißparameters und den zweiten Reglergrenzwert des zumindest einen Schweißparameters gebildeter Wertebereich einen zulässigen Regelbereich des Reglers bildet.

Die Schweißsteuerung umfasst darüber hinaus Mittel zum Bereitstellen des berechneten ersten Reglergrenzwertes und des berechneten zweiten Reglergrenzwertes des zumindest einen Schweißparameters an den Regler der Schweißsteuerung.

Die vorliegende Erfindung schafft darüber hinaus ein Computerprogramm mit Programmcode, um das erfindungsgemäße Verfahren durchzuführen, wenn das Computerprogramm auf einem Computer ausgeführt wird.

Die vorliegende Erfindung schafft des Weiteren einen computerlesbaren Datenträger mit Programmcode eines Computerprogramms, um das erfindungsgemäße Verfahren durchzuführen, wenn das Computerprogramm auf einem Computer ausgeführt wird.

Eine Idee der vorliegenden Erfindung ist es, durch Verwenden des Optimierungsalgorithmus zum Berechnen des ersten Reglergrenzwertes des zumindest einen Schweißparameters und des zweiten Reglergrenzwertes des zumindest einen Schweißparameters unter Verwendung des ersten und zweiten numerischen Wertes des Qualitätskriteriums der Schweißung ein automatisches Einstellen bzw. Setzen der Reglergrenzwerte des Reglers der Schweißsteuerung zu ermöglichen.

Somit kann in vorteilhafter Weise dem Regler der Schweißsteuerung ein bestimmter Spielraum bzw. Toleranzbereich eingeräumt werden, d.h. der Regler bewegt sich somit stets in einem für eine jeweilige Schweißaufgabe optimalen Toleranzbereich des für die Aufgabe des jeweils definierten Qualitätskriteriums der Schweißung.

Vorteilhafte Ausführungsformen und Weiterbildungen ergeben sich aus den Unteransprüchen sowie aus der Beschreibung unter Bezugnahme auf die Figuren.

Gemäß einer bevorzugten Weiterbildung ist vorgesehen, dass der Optimierungsalgorithmus ein Gradientenverfahren verwendet, bei welchem ein Extremwert, insbesondere ein Minimum oder ein Maximum, des ersten numerischen Wertes und des zweiten numerischen Wertes des Qualitätskriteriums der Schweißung auf einer durch einen Definitionsbereich des zumindest einen Schweißparameters in Funktion des Wertebereiches des Qualitätskriteriums der Schweißung gebildeten Hyperfläche bestimmt wird.

Somit können in vorteilhafter Weise optimale Reglergrenzwerte identifiziert werden, welche ein bestmögliches Qualitätskriterium erfüllen.

Gemäß einer weiteren bevorzugten Weiterbildung ist vorgesehen, dass der durch den Optimierungsalgorithmus berechnete erste Reglergrenzwert und zweite Reglergrenzwert des zumindest einen Schweißparameters vor jeder Schweißung in die Schweißsteuerung einprogrammiert werden. Somit kann jede Schweißung mit für das jeweilige Material und den jeweiligen Einsatzzweck optimalen Reglergrenzwerten des zumindest einen Schweißparameters durchgeführt werden.

Gemäß einer weiteren bevorzugten Weiterbildung ist vorgesehen, dass der erste numerische Wert des Qualitätskriteriums der Schweißung einen unteren Grenzwert des Toleranzbereiches des Qualitätskriteriums der Schweißung bildet, und wobei der zweite numerische Wert des Qualitätskriteriums der Schweißung einen oberen Grenzwert des Toleranzbereiches des Qualitätskriteriums der Schweißung bildet.

Der durch den ersten numerischen Wert des Qualitätskriteriums der Schweißung und den zweiten numerischen Wert des Qualitätskriteriums der Schweißung gebildete Toleranzbereich des Qualitätskriteriums der Schweißung bildet somit die Grundlage zur Berechnung des Regelbereichs des Reglers.

Gemäß einer weiteren bevorzugten Weiterbildung ist vorgesehen, dass ein prozentualer Nennwert des ersten numerischen Wertes und/oder des zweiten numerischen Wertes des Qualitätskriteriums der Schweißung 100 % beträgt, wobei der erste numerische Wert des Qualitätskriteriums 50 % des Nennwerts beträgt, und wobei der zweite numerische Wert des Qualitätskriteriums 150 % des Nennwerts beträgt. Die prozentuale Angabe bzw. Bestimmung des ersten numerischen Wertes und des zweiten numerischen Wertes des Qualitätskriteriums der Schweißung ermöglicht somit in vorteilhafter Weise eine universale Anwendbarkeit auf jeweilige Absolutwerte des Kriteriums der Schweißung.

Gemäß einer weiteren bevorzugten Weiterbildung ist vorgesehen, dass, falls der erste numerische Wert des Qualitätskriteriums und/oder der zweite numerische Wert des Qualitätskriteriums außerhalb des Toleranzbereiches des Qualitätskriteriums der Schweißung liegt, eine Fehlermeldung erzeugt wird. Somit kann in vorteilhafter Weise vermieden werden, dass keine Schweißung durchgeführt wird, die außerhalb des definierten Toleranzbereiches des Qualitätskriteriums der Schweißung liegt.

Gemäß einer weiteren bevorzugten Weiterbildung ist vorgesehen, dass innerhalb des Toleranzbereiches des Qualitätskriteriums ein bedingter Toleranzbereich, insbesondere ein Untertoleranzbereich, gebildet ist, wobei ein dritter numerischer Wert des Qualitätskriteriums der Schweißung einen unteren Grenzwert des bedingten Toleranzbereiches des Qualitätskriteriums der Schweißung bildet, und wobei ein vierter numerischer Wert des Qualitätskriteriums der Schweißung einen oberen Grenzwert des bedingten Toleranzbereiches des Qualitätskriteriums der Schweißung bildet.

Somit kann in vorteilhafter Weise ermöglicht werden, dass überwacht wird, dass sich die Schweißung sowohl in dem definierten Toleranzbereich als auch in dem bedingten Toleranzbereich bewegt.

Gemäß einer weiteren bevorzugten Weiterbildung ist vorgesehen, dass ein prozentualer Nennwert des ersten numerischen Wertes und/oder des zweiten numerischen Wertes des Qualitätskriteriums der Schweißung 100% beträgt, wobei der dritte numerische Wert des Qualitätskriteriums 70% des Nennwerts beträgt, und wobei der vierte numerische Wert des Qualitätskriteriums 130% des Nennwerts beträgt.

Die prozentuale Angabe bzw. Bestimmung des dritten numerischen Wertes und des vierten numerischen Wertes des Qualitätskriteriums der Schweißung ermöglicht somit in vorteilhafter Weise eine universale Anwendbarkeit auf jeweilige Absolutwerte des Kriteriums der Schweißung.

Gemäß einer weiteren bevorzugten Weiterbildung ist vorgesehen, dass, falls der dritte numerische Wert des Qualitätskriteriums und/oder der vierte numerische Wert des Qualitätskriteriums außerhalb des bedingten Toleranzbereiches des Qualitätskriteriums der Schweißung liegt, eine Warnmeldung erzeugt wird.

Somit kann in vorteilhafter Weise vermieden werden, dass ein Benutzer darüber informiert wird, wenn eine Schweißung außerhalb des bedingten Toleranzbereiches des Qualitätskriteriums liegt.

Gemäß einer weiteren bevorzugten Weiterbildung ist vorgesehen, dass der zumindest eine Schweißparameter für die Schweißsteuerung Prozessführungsparameter, insbesondere einen Schweißstrom, eine Schweißspannung, eine Elektrodenkraft, einen Schweißwiderstand, eine Pulsweite des Schweißstroms und/oder ein Drehmoment einer Servozange, und materialbezogene Schweißparameter, insbesondere ein Material und/oder eine Blechdicke eines zu schweißenden Werkstücks, umfasst. Das Qualitätskriterium der Schweißung bezieht sich somit in vorteilhafter Weise sowohl auf die entsprechenden Prozessführungsparameter als auch auf die materialbezogenen Schweißparameter. Die Schweißparameter werden somit auf die Schweißaufgabe abgestimmt, welche durch die Punktposition auf dem Bauteil, die Materialeigenschaften und die Blechgeometrie bestimmt wird.

Gemäß einer weiteren bevorzugten Weiterbildung ist vorgesehen, dass der erste numerische Wert und der zweite numerische Wert des Qualitätskriteriums der Schweißung in einem vorhergehenden Verfahren durch einen trainierten Algorithmus maschinellen Lernens unter Verwendung des zumindest einen Schweißparameters, insbesondere von Ist-Daten aus zumindest einer vorherigen Schweißung und Soll-Daten aus der nächsten Schweißung, approximiert wird. Diese Daten können sodann als Eingabedaten für den Algorithmus maschinellen Lernens zum Approximieren eines numerischen Wertes einer Zielfunktion, insbesondere des Qualitätskriteriums, verwendet werden.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.

Es zeigen:
- Fig. 1: ein Ablaufdiagramm eines computerimplementierten Verfahrens zum dynamischen Setzen von Reglergrenzwerten zumindest eines Schweißparameters eines Reglers einer Schweißsteuerung gemäß einer bevorzugten Ausführungsform der Erfindung;
- Fig. 2: eine schematische Darstellung eines Toleranzbereiches und eines bedingten Toleranzbereiches eines Qualitätskriteriums der Schweißung gemäß der bevorzugten Ausführungsform der Erfindung; und
- Fig. 3: eine schematische Darstellung einer Schweißsteuerung zum dynamischen Setzen von Reglergrenzwerten des zumindest einen Schweißparameters des Reglers der Schweißsteuerung gemäß der bevorzugten Ausführungsform der Erfindung.

In den Figuren der Zeichnungen bezeichnen gleiche Bezugszeichen gleiche oder funktionsgleiche Elemente, Bauteile oder Komponenten, soweit nichts Gegenteiliges angegeben ist.

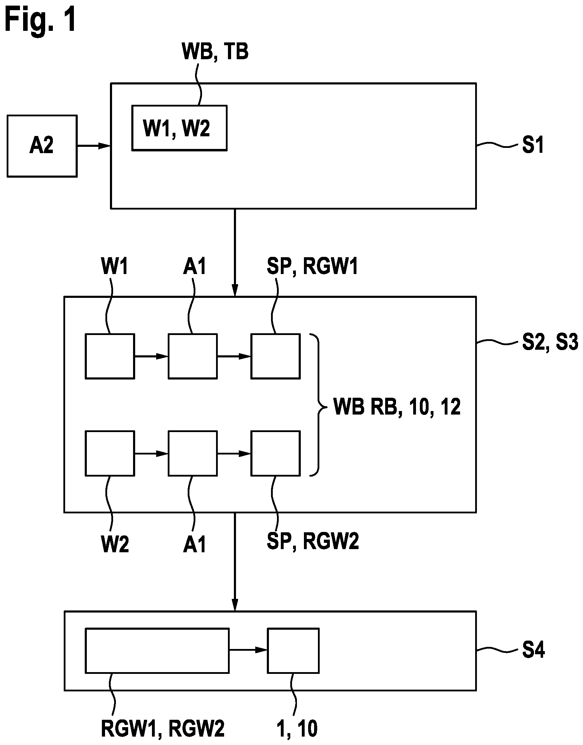

Fig. 1 zeigt ein Ablaufdiagramm eines computerimplementierten Verfahrens zum dynamischen Setzen von Reglergrenzwerten zumindest eines Schweißparameters eines Reglers einer Schweißsteuerung gemäß einer bevorzugten Ausführungsform der Erfindung.

Das Verfahren umfasst ein Empfangen S1 eines ersten numerischen Wertes W1 und eines zweiten numerischen Wertes W2 eines Qualitätskriteriums einer Schweißung.

Ein durch den ersten numerischen Wert W1 und den zweiten numerischen Wert W2 gebildeter Wertebereich WB bildet einen Toleranzbereich TB des Qualitätskriteriums der Schweißung.

Das Verfahren umfasst des Weiteren ein Berechnen S2 eines ersten Reglergrenzwertes RGW1 des zumindest einen Schweißparameters SP durch einen Optimierungsalgorithmus A1 unter Verwendung des ersten numerischen Wertes W1 des Qualitätskriteriums der Schweißung.

Ferner umfasst das Verfahren ein Berechnen S3 eines zweiten Reglergrenzwertes RGW2 des zumindest einen Schweißparameters SP durch den Optimierungsalgorithmus A1 unter Verwendung des zweiten numerischen Wertes W2 des Qualitätskriteriums der Schweißung. Ein durch den ersten Reglergrenzwert RGW1 des zumindest einen Schweißparameters SP und den zweiten Reglergrenzwert RGW2 des zumindest einen Schweißparameters SP gebildeter Wertebereich WB bildet einen zulässigen Regelbereich RB des Reglers 10.

Darüber hinaus umfasst das Verfahren ein Bereitstellen S4 des berechneten ersten Reglergrenzwertes RGW1 und des berechneten zweiten Reglergrenzwertes RGW2 des zumindest einen Schweißparameters SP an den Regler 10 der Schweißsteuerung 1.

Der Optimierungsalgorithmus A1 verwendet ein Gradientenverfahren, bei welchem ein Extremwert, insbesondere ein Minimum oder ein Maximum, des ersten numerischen Wertes W1 und des zweiten numerischen Wertes W2 des Qualitätskriteriums der Schweißung auf einer durch einen Definitionsbereich des zumindest einen Schweißparameters SP in Funktion des Wertebereichs WB des Qualitätskriteriums der Schweißung gebildeten Hyperfläche bestimmt wird.

Der durch den Optimierungsalgorithmus A1 berechnete erste Reglergrenzwert RGW1 und der zweite Reglergrenzwert RGW2 des zumindest einen Schweißparameters SP werden vorzugsweise vor jeder Schweißung in die Schweißsteuerung 1 einprogrammiert. Alternativ kann die Einprogrammierung der Reglergrenzwerte RGW1, RGW2 beispielsweise in Abhängigkeit einer jeweiligen Schweißaufgabe vor einem Wechsel zu einer anderen, abweichenden Schweißaufgabe einprogrammiert werden.

Der zumindest eine Schweißparameter SP für die Schweißsteuerung 1 umfasst sowohl Prozessführungsparameter als auch materialbezogene Schweißparameter SP.

Die Prozessführungsparameter umfassen einen Schweißstrom, eine Schweißspannung, eine Elektrodenkraft, einen Schweißwiderstand, eine Pulsweite des Schweißstroms und/oder ein Drehmoment einer Servozange. Die materialbezogenen Schweißparameter SP umfassen ein Material und/oder eine Blechdicke eines zu schweißenden Werkstücks.

Der erste numerische Wert W1 und der zweite numerische Wert W2 des Qualitätskriteriums der Schweißung werden in einem vorhergehenden Verfahren durch einen trainierten Algorithmus maschinellen Lernens A2 unter Verwendung des zumindest einen Schweißparameters SP, insbesondere von Ist-Daten aus zumindest einer vorherigen Schweißung und Soll-Daten aus einer nächsten Schweißung, approximiert.

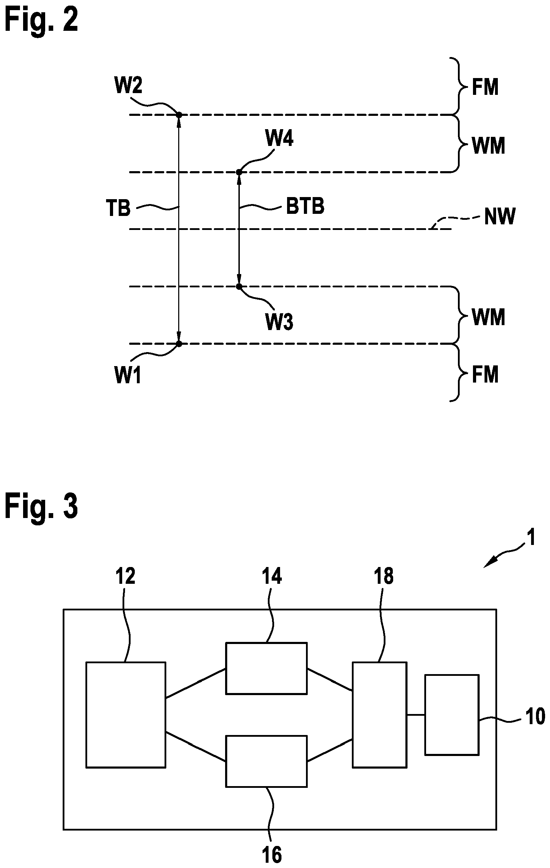

Fig. 2 zeigt eine schematische Darstellung eines Toleranzbereiches und eines bedingten Toleranzbereiches eines Qualitätskriteriums der Schweißung gemäß der bevorzugten Ausführungsform der Erfindung.

Der erste numerische Wert W1 des Qualitätskriteriums der Schweißung bildet einen unteren Grenzwert des Toleranzbereiches TB des Qualitätskriteriums der Schweißung. Der zweite numerische Wert W2 des Qualitätskriteriums der Schweißung bildet einen oberen Grenzwert des Toleranzbereiches TB des Qualitätskriteriums der Schweißung.

Ein prozentualer Nennwert NW des ersten numerischen Wertes W1 und/oder des zweiten numerischen Wertes W2 des Qualitätskriteriums der Schweißung beträgt 100 %. Der erste numerische Wert W1 des Qualitätskriteriums beträgt in der vorliegenden Ausführungsform 50 % des Nennwerts NW. Der zweite numerische Wert W2 des Qualitätskriteriums beträgt vorzugsweise 150 % des Nennwertes NW.

Alternativ kann der erste numerische Wert W1 des Qualitätskriteriums einen anderen geeigneten prozentualen Wert des Nennwerts NW, beispielsweise einen Wert zwischen 30% und 60% des Nennwerts NW aufweisen. Ebenfalls kann der erste numerische Wert W2 des Qualitätskriteriums einen anderen geeigneten prozentualen Wert des Nennwerts NW, beispielsweise einen Wert zwischen 135% und 160% des Nennwerts NW aufweisen.

Der Toleranzbereich TB des Qualitätskriteriums der Schweißung erstreckt sich somit von dem ersten numerischen Wert W1 bis zu dem zweiten numerischen Wert W2 des Qualitätskriteriums der Schweißung.

Falls der erste numerische Wert W1 des Qualitätskriteriums und/oder der zweite numerische Wert W2 des Qualitätskriteriums außerhalb des Toleranzbereiches TB des Qualitätskriteriums der Schweißung liegt, wird durch die Schweißsteuerung eine Fehlermeldung FM erzeugt.

Innerhalb des Toleranzbereiches TB des Qualitätskriteriums ist ferner ein bedingter Toleranzbereich BTB, insbesondere ein Untertoleranzbereich, gebildet.

Ein dritter numerischer Wert W3 des Qualitätskriteriums der Schweißung bildet einen unteren Grenzwert des bedingten Toleranzbereiches BTB des Qualitätskriteriums der Schweißung. Ein vierter numerischer Wert W4 des Qualitätskriteriums der Schweißung bildet einen oberen Grenzwert des bedingten Toleranzbereiches BTB des Qualitätskriteriums der Schweißung.

Der dritte numerische Wert W3 des Qualitätskriteriums beträgt in der vorliegenden Ausführungsform 70% des Nennwertes NW des ersten numerischen Wertes W1 und/oder des zweiten numerischen Wertes W2 des Qualitätskriteriums der Schweißung. Der vierte numerische Wert W4 des Qualitätskriteriums beträgt vorzugsweise 130 % des Nennwerts NW.

Alternativ kann der dritte numerische Wert W3 des Qualitätskriteriums einen anderen geeigneten prozentualen Wert des Nennwerts NW, beispielsweise einen Wert zwischen 65% und 95% des Nennwerts NW aufweisen. Ebenfalls kann der vierte numerische Wert W4 des Qualitätskriteriums einen anderen geeigneten prozentualen Wert des Nennwerts NW, beispielsweise einen Wert zwischen 105% und 145% des Nennwerts NW aufweisen.

Falls der dritte numerische Wert W3 des Qualitätskriteriums und/oder der vierte numerische Wert W4 des Qualitätskriteriums außerhalb des bedingten Toleranzbereiches BTB des Qualitätskriteriums der Schweißung liegt, wird eine Warnmeldung WM erzeugt.

Fig. 3 zeigt eine schematische Darstellung einer Schweißsteuerung zum dynamischen Setzen von Reglergrenzwerten des zumindest einen Schweißparameters des Reglers der Schweißsteuerung gemäß der bevorzugten Ausführungsform der Erfindung.

Die Schweißsteuerung 1 umfasst Mittel 12 zum Empfangen eines ersten numerischen Wertes W1 und eines zweiten numerischen Wertes W2 eines Qualitätskriteriums einer Schweißung. Ein durch den ersten numerischen Wert W1 und den zweiten numerischen Wert W2 gebildeter Wertebereich WB bilden einen Toleranzbereich TB des Qualitätskriteriums der Schweißung.

Die Schweißsteuerung umfasst ferner Mittel 14 zum Berechnen eines ersten Reglergrenzwertes RGW1 des zumindest einen Schweißparameters SP durch einen Optimierungsalgorithmus A1 unter Verwendung des ersten numerischen Wertes W1 des Qualitätskriteriums der Schweißung.

Darüber hinaus umfasst die Schweißsteuerung 1 Mittel 16 zum Berechnen eines zweiten Reglergrenzwertes RGW2 des zumindest einen Schweißparameters SP durch den Optimierungsalgorithmus A1 unter Verwendung des zweiten numerischen Wertes W2 des Qualitätskriteriums der Schweißung.

Ein durch den ersten Reglergrenzwert RGW1 des zumindest einen Schweißparameters SP und den zweiten Reglergrenzwert RGW2 des zumindest einen Schweißparameters SP gebildeter Wertebereich WB bildet einen zulässigen Regelbereich RB des Reglers 10.

Des Weiteren umfasst die Schweißsteuerung 1 Mittel 18 zum Bereitstellen des berechneten ersten Reglergrenzwertes RGW1 und des berechneten zweiten Reglergrenzwertes RGW2 des zumindest einen Schweißparameters SP an den Regler 10 der Schweißsteuerung 1.

## Patentansprüche

1. Computerimplementiertes Verfahren zum dynamischen Setzen von Reglergrenzwerten (RGW1, RGW2) zumindest eines Schweißparameters (SP) eines Reglers (10) einer Schweißsteuerung (1), mit den Schritten:
Empfangen (S1) eines ersten numerischen Wertes (W1) und eines zweiten numerischen Wertes (W2) eines Qualitätskriteriums einer Schweißung, wobei ein durch den ersten numerischen Wert (W1) und den zweiten numerischen Wert (W2) gebildeter Wertebereich (WB) einen Toleranzbereich (TB) des Qualitätskriteriums der Schweißung bildet;
**gekennzeichnet durch** folgende Schritte:
Berechnen (S2) eines ersten Reglergrenzwertes (RGW1) des zumindest einen Schweißparameters (SP) durch einen Optimierungsalgorithmus (A1) unter Verwendung des ersten numerischen Wertes (W1) des Qualitätskriteriums der Schweißung;
Berechnen (S3) eines zweiten Reglergrenzwertes (RGW2) des zumindest einen Schweißparameters (SP) durch den Optimierungsalgorithmus (A1) unter Verwendung des zweiten numerischen Wertes (W2) des Qualitätskriteriums der Schweißung, wobei ein durch den ersten Reglergrenzwert (RGW1) des zumindest einen Schweißparameters (SP) und den zweiten Reglergrenzwert (RGW2) des zumindest einen Schweißparameters (SP) gebildeter Wertebereich (WB) einen zulässigen Regelbereich (RB) des Reglers (10) bildet; und
Bereitstellen (S4) des berechneten ersten Reglergrenzwertes (RGW1) und des berechneten zweiten Reglergrenzwertes (RGW2) des zumindest einen Schweißparameters (SP) an den Regler (10) der Schweißsteuerung (1).

2. Computerimplementiertes Verfahren nach Anspruch 1, **dadurch gekennzeichnet, dass** der Optimierungsalgorithmus (A1) ein Gradientenverfahren verwendet, bei welchem ein Extremwert, insbesondere ein Minimum oder ein Maximum, des ersten numerischen Wertes (W1) und des zweiten numerischen Wertes (W2) des Qualitätskriteriums der Schweißung auf einer durch einen Definitionsbereich des zumindest einen Schweißparameters (SP) in Funktion des Wertebereiches (WB) des Qualitätskriteriums der Schweißung gebildeten Hyperfläche bestimmt wird.

3. Computerimplementiertes Verfahren nach Anspruch 1 oder 2, **dadurch gekennzeichnet, dass** der durch den Optimierungsalgorithmus (A1) berechnete erste Reglergrenzwert (RGW1) und zweite Reglergrenzwert (RGW2) des zumindest einen Schweißparameters (SP) vor jeder Schweißung in die Schweißsteuerung (1) einprogrammiert werden.

4. Computerimplementiertes Verfahren nach einem der vorhergehenden Ansprüche, **dadurch gekennzeichnet, dass** der erste numerische Wert (W1) des Qualitätskriteriums der Schweißung einen unteren Grenzwert des Toleranzbereiches (TB) des Qualitätskriteriums der Schweißung bildet, und wobei der zweite numerische Wert (W2) des Qualitätskriteriums der Schweißung einen oberen Grenzwert des Toleranzbereiches (TB) des Qualitätskriteriums der Schweißung bildet.

5. Computerimplementiertes Verfahren nach einem der vorhergehenden Ansprüche, **dadurch gekennzeichnet, dass** ein prozentualer Nennwert (NW) des ersten numerischen Wertes (W1) und/oder des zweiten numerischen Wertes (W2) des Qualitätskriteriums der Schweißung 100% beträgt, wobei der erste numerische Wert (W1) des Qualitätskriteriums 50% des Nennwerts (NW) beträgt, und wobei der zweite numerische Wert (W2) des Qualitätskriteriums 150% des Nennwerts (NW) beträgt.

6. Computerimplementiertes Verfahren nach Anspruch 4 oder 5, **dadurch gekennzeichnet, dass** falls der erste numerische Wert (W1) des Qualitätskriteriums und/oder der zweite numerische Wert (W2) des Qualitätskriteriums außerhalb des Toleranzbereiches (TB) des Qualitätskriteriums der Schweißung liegt, eine Fehlermeldung (FM) erzeugt wird.

7. Computerimplementiertes Verfahren nach einem der vorhergehenden Ansprüche, **dadurch gekennzeichnet, dass** innerhalb des Toleranzbereiches (TB) des Qualitätskriteriums ein bedingter Toleranzbereich (BTB), insbesondere ein Untertoleranzbereich, gebildet ist, wobei ein dritter numerischer Wert (W3) des Qualitätskriteriums der Schweißung einen unteren Grenzwert des bedingten Toleranzbereiches (BTB) des Qualitätskriteriums der Schweißung bildet, und wobei ein vierter numerischer Wert (W4) des Qualitätskriteriums der Schweißung einen oberen Grenzwert des bedingten Toleranzbereiches (BTB) des Qualitätskriteriums der Schweißung bildet.

8. Computerimplementiertes Verfahren nach Anspruch 7, **dadurch gekennzeichnet, dass** ein prozentualer Nennwert (NW) des ersten numerischen Wertes (W1) und/oder des zweiten numerischen Wertes (W2) des Qualitätskriteriums der Schweißung 100% beträgt, wobei der dritte numerische Wert (W3) des Qualitätskriteriums 70% des Nennwerts (NW) beträgt, und wobei der vierte numerische Wert (W4) des Qualitätskriteriums 130% des Nennwerts (NW) beträgt.

9. Computerimplementiertes Verfahren nach Anspruch 7 oder 8, **dadurch gekennzeichnet, dass** falls der dritte numerische Wert (W3) des Qualitätskriteriums und/oder der vierte numerische Wert (W4) des Qualitätskriteriums außerhalb des bedingten Toleranzbereiches (BTB) des Qualitätskriteriums der Schweißung liegt, eine Warnmeldung (WM) erzeugt wird.

10. Computerimplementiertes Verfahren nach einem der vorhergehenden Ansprüche, **dadurch gekennzeichnet, dass** der zumindest eine Schweißparameter (SP) für die Schweißsteuerung (1) Prozessführungsparameter, insbesondere einen Schweißstrom, eine Schweißspannung, eine Elektrodenkraft, einen Schweißwiderstand, eine Pulsweite des Schweißstroms und/oder ein Drehmoment einer Servozange, und materialbezogene Schweißparameter (SP), insbesondere ein Material und/oder eine Blechdicke eines zu schweißenden Werkstücks umfasst.

11. Computerimplementiertes Verfahren nach einem der vorhergehenden Ansprüche, **dadurch gekennzeichnet, dass** der erste numerische Wert (W1) und der zweite numerische Wert (W2) des Qualitätskriteriums der Schweißung in einem vorhergehenden Verfahren durch einen trainierten Algorithmus maschinellen Lernens (A2) unter Verwendung des zumindest einen Schweißparameters (SP), insbesondere von Ist-Daten aus zumindest einer vorherigen Schweißung und Soll-Daten aus einer nächsten Schweißung, approximiert werden.

12. Schweißsteuerung (1) zum dynamischen Setzen von Reglergrenzwerten (RGW1, RGW2) zumindest eines Schweißparameters (SP) eines Reglers (10) der Schweißsteuerung (1), umfassend:
Mittel (12) zum Empfangen eines ersten numerischen Wertes (W1) und eines zweiten numerischen Wertes (W2) eines Qualitätskriteriums einer Schweißung, wobei ein durch den ersten numerischen Wert (W1) und den zweiten numerischen Wert (W2) gebildeter Wertebereich (WB) einen Toleranzbereich (TB) des Qualitätskriteriums der Schweißung bildet;
**gekennzeichnet durch**:
Mittel (14) zum Berechnen eines ersten Reglergrenzwertes (RGW1) des zumindest einen Schweißparameters (SP) durch einen Optimierungsalgorithmus (A1) unter Verwendung des ersten numerischen Wertes (W1) des Qualitätskriteriums der Schweißung;
Mittel (16) zum Berechnen eines zweiten Reglergrenzwertes (RGW2) des zumindest einen Schweißparameters (SP) durch den Optimierungsalgorithmus (A1) unter Verwendung des zweiten numerischen Wertes (W2) des Qualitätskriteriums der Schweißung, wobei ein durch den ersten Reglergrenzwert (RGW1) des zumindest einen Schweißparameters (SP) und den zweiten Reglergrenzwert (RGW2) des zumindest einen Schweißparameters (SP) gebildeter Wertebereich (WB) einen zulässigen Regelbereich (RB) des Reglers (10) bildet; und
Mittel (18) zum Bereitstellen des berechneten ersten Reglergrenzwertes (RGW1) und des berechneten zweiten Reglergrenzwertes (RGW2) des zumindest einen Schweißparameters (SP) an den Regler (10) der Schweißsteuerung (1).

13. Computerprogramm mit Programmcode, um das Verfahren nach einem der Ansprüche 1 bis 11 durchzuführen, wenn das Computerprogramm auf einem Computer ausgeführt wird.

14. Computerlesbarer Datenträger mit Programmcode eines Computerprogramms, um das Verfahren nach einem der Ansprüche 1 bis 11 durchzuführen, wenn das Computerprogramm auf einem Computer ausgeführt wird.

## Claims

1. Computer-implemented method for dynamically setting controller limit values (RGW1, RGW2) for at least one welding parameter (SP) of a controller (10) of a welding control (1), having the steps of:
receiving (S1) a first numerical value (W1) and a second numerical value (W2) of a quality criterion for a weld, a value range (WB) formed by the first numerical value (W1) and the second numerical value (W2) forming a tolerance range (TB) for the quality criterion for the weld;
**characterized by** the following steps:
calculating (S2) a first controller limit value (RGW1) of the at least one welding parameter (SP) by way of an optimization algorithm (A1) by using the first numerical value (W1) of the quality criterion for the weld;
calculating (S3) a second controller limit value (RGW2) of the at least one welding parameter (SP) by way of the optimization algorithm (A1) by using the second numerical value (W2) of the quality criterion for the weld, a value range (WB) formed by the first controller limit value (RGW1) of the at least one welding parameter (SP) and the second controller limit value (RGW2) of the at least one welding parameter (SP) forming an admissible control range (RB) for the controller (10); and
providing (S4) the calculated first controller limit value (RGW1) and the calculated second controller limit value (RGW2) of the at least one welding parameter (SP) to the controller (10) of the welding control (1).

2. Computer-implemented method according to Claim 1, **characterized in that** the optimization algorithm (A1) uses a gradient method in which an extreme value, in particular a minimum or a maximum, of the first numerical value (W1) and of the second numerical value (W2) of the quality criterion for the weld is determined on a hypersurface formed by a definition range for the at least one welding parameter (SP) as a function of the value range (WB) for the quality criterion for the weld.

3. Computer-implemented method according to Claim 1 or 2, **characterized in that** the first controller limit value (RGW1) and second controller limit value (RGW2) for the at least one welding parameter (SP), which are calculated by way of the optimization algorithm (A1), are programmed into the welding control (1) before each weld.

4. Computer-implemented method according to one of the preceding claims, **characterized in that** the first numerical value (W1) of the quality criterion for the weld forms a lower limit value for the tolerance range (TB) for the quality criterion for the weld, and wherein the second numerical value (W2) of the quality criterion for the weld forms an upper limit value for the tolerance range (TB) for the quality criterion for the weld.

5. Computer-implemented method according to one of the preceding claims, **characterized in that** a percentage rated value (NW) of the first numerical value (W1) and/or of the second numerical value (W2) of the quality criterion for the weld is 100%, the first numerical value (W1) of the quality criterion being 50% of the rated value (NW) and the second numerical value (W2) of the quality criterion being 150% of the rated value (NW).

6. Computer-implemented method according to Claim 4 or 5, **characterized in that** if the first numerical value (W1) of the quality criterion and/or the second numerical value (W2) of the quality criterion lies outside the tolerance range (TB) for the quality criterion for the weld, an error message (FM) is produced.

7. Computer-implemented method according to one of the preceding claims, **characterized in that** a conditional tolerance range (BTB), in particular a subsidiary tolerance range, is formed within the tolerance range (TB) for the quality criterion, a third numerical value (W3) of the quality criterion for the weld forming a lower limit value for the conditional tolerance range (BTB) for the quality criterion for the weld and a fourth numerical value (W4) of the quality criterion for the weld forming an upper limit value for the conditional tolerance range (BTB) for the quality criterion for the weld.

8. Computer-implemented method according to Claim 7, **characterized in that** a percentage rated value (NW) of the first numerical value (W1) and/or of the second numerical value (W2) of the quality criterion for the weld is 100%, the third numerical value (W3) of the quality criterion being 70% of the rated value (NW) and the fourth numerical value (W4) of the quality criterion being 130% of the rated value (NW).

9. Computer-implemented method according to Claim 7 or 8, **characterized in that** if the third numerical value (W3) of the quality criterion and/or the fourth numerical value (W4) of the quality criterion lies outside the conditional tolerance range (BTB) for the quality criterion for the weld, a warning message (WM) is produced.

10. Computer-implemented method according to one of the preceding claims, **characterized in that** the at least one welding parameter (SP) for the welding control (1) comprises process control parameters, in particular a welding current, a welding voltage, an electrode force, a welding resistance, a pulse width of the welding current and/or a torque of a servo gun, and material-related welding parameters (SP), in particular a material and/or a sheet thickness of a workpiece to be welded.

11. Computer-implemented method according to one of the preceding claims, **characterized in that** the first numerical value (W1) and the second numerical value (W2) of the quality criterion for the weld are approximated in a preceding method by way of a trained machine learning algorithm (A2) by using the at least one welding parameter (SP), in particular actual data from at least one previous weld and target data from a next weld.

12. Welding control (1) for dynamically setting controller limit values (RGW1, RGW2) for at least one welding parameter (SP) of a controller (10) of the welding control (1), comprising:
means (12) for receiving a first numerical value (W1) and a second numerical value (W2) of a quality criterion for a weld, a value range (WB) formed by the first numerical value (W1) and the second numerical value (W2) forming a tolerance range (TB) for the quality criterion for the weld;
**characterized by**:
means (14) for calculating a first controller limit value (RGW1) of the at least one welding parameter (SP) by way of an optimization algorithm (A1) by using the first numerical value (W1) of the quality criterion for the weld;
means (16) for calculating a second controller limit value (RGW2) of the at least one welding parameter (SP) by way of the optimization algorithm (A1) by using the second numerical value (W2) of the quality criterion for the weld, a value range (WB) formed by the first controller limit value (RGW1) of the at least one welding parameter (SP) and the second controller limit value (RGW2) of the at least one welding parameter (SP) forming an admissible control range (RB) for the controller (10); and
means (18) for providing the calculated first controller limit value (RGW1) and the calculated second controller limit value (RGW2) of the at least one welding parameter (SP) to the controller (10) of the welding control (1).

13. Computer program containing program code in order to perform the method according to one of Claims 1 to 11 when the computer program is executed on a computer.

14. Computer-readable data carrier containing program code of a computer program in order to perform the method according to one of Claims 1 to 11 when the computer program is executed on a computer.

## Revendications

1. Procédé mis en œuvre par ordinateur destiné au réglage dynamique de valeurs limites de régulateur (RGW1, RGW2) d'au moins un paramètre de soudage (SP) d'un régulateur (10) d'une commande de soudage (1), comprenant les étapes consistant à :
recevoir (S1) une première valeur numérique (W1) et une deuxième valeur numérique (W2) d'un critère de qualité d'une soudure, dans lequel une plage de valeurs (WB) constituée par la première valeur numérique (W1) et la deuxième valeur numérique (W2) constitue une plage de tolérance (TB) du critère de qualité de la soudure ;
**caractérisé par** les étapes consistant à :
calculer (S2) une première valeur limite de régulateur (RGW1) dudit au moins un paramètre de soudage (SP) au moyen d'un algorithme d'optimisation (A1) en utilisant la première valeur numérique (W1) du critère de qualité du soudage ;
calculer (S3) une deuxième valeur limite de régulateur (RGW2) dudit au moins un paramètre de soudage (SP) au moyen de l'algorithme d'optimisation (A1) en utilisant la deuxième valeur numérique (W2) du critère de qualité du soudage, dans lequel une plage de valeurs (WB) constituée par la première valeur limite de régulateur (RGW1) dudit au moins un paramètre de soudage (SP) et la deuxième valeur limite de régulateur (RGW2) dudit au moins un paramètre de soudage (SP) constitue une plage de régulation admissible (RB) du régulateur (10) ; et
fournir (S4) la première valeur limite de régulateur calculée (RGW1) et la deuxième valeur limite de régulateur calculée (RGW2) dudit au moins un paramètre de soudage (SP) au régulateur (10) de la commande de soudage (1).

2. Procédé mis en œuvre par ordinateur selon la revendication 1, **caractérisé en ce que** l'algorithme d'optimisation (A1) utilise une méthode du gradient, dans lequel une valeur extrême, notamment un minimum ou un maximum, de la première valeur numérique (W1) et de la deuxième valeur numérique (W2) du critère de qualité de la soudure sur une hypersurface constituée par une plage de définition dudit au moins un paramètre de soudure (SP) est déterminée en fonction de la plage de valeurs (WB) du critère de qualité de la soudure.

3. Procédé mis en œuvre par ordinateur selon la revendication 1 ou 2, **caractérisé en ce que** la première valeur limite de régulateur (RGW1) et la deuxième valeur limite de régulateur (RGW2) dudit au moins un paramètre de soudage (SP), calculées au moyen de l'algorithme d'optimisation (Al), sont programmées dans la commande de soudage (1) avant chaque soudage.

4. Procédé mis en œuvre par ordinateur selon l'une quelconque des revendications précédentes, **caractérisé en ce que** la première valeur numérique (W1) du critère de qualité de la soudure constitue une valeur limite inférieure de la plage de tolérance (TB) du critère de qualité de la soudure, et dans lequel la deuxième valeur numérique (W2) du critère de qualité de la soudure constitue une valeur limite supérieure de la plage de tolérance (TB) du critère de qualité de la soudure.

5. Procédé mis en œuvre par ordinateur selon l'une quelconque des revendications précédentes, **caractérisé en ce qu'**une valeur nominale en pourcentage (NW) de la première valeur numérique (W1) et/ou de la deuxième valeur numérique (W2) du critère de qualité de la soudure est égale à 100%, dans lequel la première valeur numérique (W1) du critère de qualité est égale à 50 % de la valeur nominale (NW), et dans lequel la deuxième valeur numérique (W2) du critère de qualité est égale à 150% de la valeur nominale (NW).

6. Procédé mis en œuvre par ordinateur selon la revendication 4 ou 5, **caractérisé en ce que** si la première valeur numérique (W1) du critère de qualité et/ou la deuxième valeur numérique (W2) du critère de qualité se situe en dehors de la plage de tolérance (TB) du critère de qualité de la soudure, un message d'erreur (FM) est généré.

7. Procédé mis en œuvre par ordinateur selon l'une quelconque des revendications précédentes, **caractérisé en ce qu'**une plage de tolérance conditionnelle (BTB), notamment une plage de sous-tolérance, est établie au sein de la plage de tolérance (TB) du critère de qualité, dans lequel une troisième valeur numérique (W3) du critère de qualité de la soudure constitue une valeur limite inférieure de la plage de tolérance conditionnelle (BTB) du critère de qualité de la soudure, et dans lequel une quatrième valeur numérique (W4) du critère de qualité de la soudure constitue une valeur limite supérieure de la plage de tolérance conditionnelle (BTB) du critère de qualité de la soudure.

8. Procédé mis en œuvre par ordinateur selon la revendication 7, **caractérisé en ce qu'**une valeur nominale en pourcentage (NW) de la première valeur numérique (W1) et/ou de la deuxième valeur numérique (W2) du critère de qualité de la soudure est égale à 100%, dans lequel la troisième valeur numérique (W3) du critère de qualité est égale à 70 % de la valeur nominale (NW), et dans lequel la quatrième valeur numérique (W4) du critère de qualité est égale à 130% de la valeur nominale (NW).

9. Procédé mis en œuvre par ordinateur selon la revendication 7 ou 8, **caractérisé en ce que** si la troisième valeur numérique (W3) du critère de qualité et/ou la quatrième valeur numérique (W4) du critère de qualité se situe en dehors de la plage de tolérance conditionnelle (BTB) du critère de qualité de la soudure, un message d'avertissement (WM) est généré.

10. Procédé mis en œuvre par ordinateur selon l'une quelconque des revendications précédentes, **caractérisé en ce que** ledit au moins un paramètre de soudage (SP) destiné à la commande de soudage (1) comprend des paramètres de conduite de processus, notamment un courant de soudage, une tension de soudage, une force d'électrode, une résistance de soudage, une largeur d'impulsion du courant de soudage et/ou un couple d'une pince asservie, et des paramètres de soudage (SP) liés au matériau, notamment un matériau et/ou une épaisseur de tôle d'une pièce à souder.

11. Procédé mis en œuvre par ordinateur selon l'une quelconque des revendications précédentes, **caractérisé en ce que** la première valeur numérique (W1) et la deuxième valeur numérique (W2) du critère de qualité de la soudure sont déterminée de façon approximative dans un procédé précédent au moyen d'un apprentissage automatique par algorithme entraîné (A2) en utilisant ledit au moins un paramètre de soudure (SP), notamment des données réelles provenant d'au moins une soudure précédente et des données cibles provenant d'une soudure suivante.

12. Commande de soudage (1) destinée au réglage dynamique de valeurs limites de régulateur (RGW1, RGW2) d'au moins un paramètre de soudage (SP) d'un régulateur (10) de la commande de soudage (1), comprenant :
des moyens (12) destinés à recevoir une première valeur numérique (W1) et une deuxième valeur numérique (W2) d'un critère de qualité d'une soudure, dans lequel une plage de valeurs (WB) constituée par la première valeur numérique (W1) et la deuxième valeur numérique (W2) constitue une plage de tolérance (TB) du critère de qualité de la soudure ;
**caractérisé par** :
des moyens (14) destinés à calculer une première valeur limite de régulateur (RGW1) dudit au moins un paramètre de soudage (SP) au moyen d'un algorithme d'optimisation (A1) en utilisant la première valeur numérique (W1) du critère de qualité du soudage ;
des moyens (16) destinés à calculer une deuxième valeur limite de régulateur (RGW2) dudit au moins un paramètre de soudage (SP) au moyen de l'algorithme d'optimisation (A1) en utilisant la deuxième valeur numérique (W2) du critère de qualité du soudage, dans lequel une plage de valeurs (WB) constituée par la première valeur limite de régulateur (RGW1) dudit au moins un paramètre de soudage (SP) et la deuxième valeur limite de régulateur (RGW2) dudit au moins un paramètre de soudage (SP) constitue une plage de régulation admissible (RB) du régulateur (10) ; et
des moyens (18) destinés à fournir la première valeur limite de régulateur calculée (RGW1) et la deuxième valeur limite de régulateur calculée (RGW2) dudit au moins un paramètre de soudage (SP) au régulateur (10) de la commande de soudage (1).

13. Programme informatique comprenant un code de programme destiné à mettre en œuvre le procédé selon l'une quelconque des revendications 1 à 11 lorsque le programme informatique est exécuté sur un ordinateur.

14. Support de données lisible par ordinateur contenant un code de programme d'un programme informatique destiné à mettre en œuvre le procédé selon l'une quelconque des revendications 1 à 11 lorsque le programme informatique est exécuté sur un ordinateur.
